# EUROPÄISCHE PATENTSCHRIFT

(11) **EP 4 532 234 B1**
(45) Veröffentlichungstag und Bekanntmachung des Hinweises auf die Patenterteilung: **24.09.2025**
(21) Anmeldenummer: 24765019.5
(22) Anmeldetag: 14.08.2024
(51) Int. Cl.: B60H 1/00, B60H 1/30, F41H 7/02

(54) **FAHRZEUG, INSBESONDERE MILITÄRISCHES KAMPFFAHRZEUG**
VEHICLE, ESPECIALLY MILITARY COMBAT VEHICLE
VÉHICULE, EN PARTICULIER VÉHICULE DE COMBAT MILITAIRE

(30) Priorität: 18.08.2023 DE 202023104690 U
(43) Veröffentlichungstag der Anmeldung: 09.04.2025
(73) Patentinhaber: KNDS Deutschland GmbH & Co. KG, 80997 München (DE)
(72) Erfinder: STODOLKA, Sascha, 80997 München (DE); KEIM, Matthias, 80997 München (DE)
(74) Vertreter: Feder Walter Ebert
(86) Internationale Anmeldenummer: PCT/DE2024/100721
(87) Internationale Veröffentlichungsnummer: WO 2025/040209

(56) Entgegenhaltungen:
- EP-A1- 1 508 768
- EP-B1- 3 652 495
- DE-A1- 19 720 815
- DE-U1- 202015 102 347
- US-B1- 7 478 580

## Beschreibung

Die vorliegende Erfindung betrifft ein Fahrzeug, insbesondere ein militärisches Kampffahrzeug, mit einer Fahrzeugwanne und einem oberhalb der Fahrzeugwanne um eine Azimutrichtachse drehbar angeordneten, eine Waffe aufnehmenden Waffenturm, an dessen Heckseite mindestens ein Heckkasten mit einem Luftbehandlungsgerät zur Dekontamination und/oder Temperierung der Fahrzeuginnenluft angeordnet ist.

Derartige Fahrzeuge werden im militärischen Bereich beispielsweise als Kampf- oder Schützenpanzer in verschiedenen Varianten verwendet.

Das Fahrzeug setzt sich dabei aus einer zumeist gegen militärische Bedrohungen geschützt ausgebildeten Fahrzeugwanne, beispielsweise aus einem Panzerstahl, zur Aufnahme der Fahrzeugbesatzung und einem oberhalb der Fahrzeugwanne um eine sich im Wesentlichen in vertikaler Richtung erstreckende Azimutrichtachse drehbar angeordneten Waffenturm zusammen. Der Waffenturm kann ebenfalls zur Aufnahme eines oder mehrerer Besatzungsmitglieder bemannt ausgebildet sein, was bei Kampfpanzern häufiger der Fall ist. Alternativ kann der Waffenturm aber auch unbemannt ausgebildet und aus dem Inneren der Fahrzeugwanne heraus fernbedienbar ausgebildet sein.

An dem Waffenturm ist in der Regel eine die Hauptbewaffnung des Fahrzeugs bildende Waffe um eine weitere, sich im Wesentlichen in horizontaler Richtung erstreckende Elevationsrichtachse richtbar aufgenommen. Um eine gestufte Waffenwirkung zu ermöglichen, wird neben der eigentlichen Hauptbewaffnung an dem Waffenturm häufig auch eine Sekundärbewaffnung vorgesehen, etwa eine Lafette zur Aufnahme einer im Vergleich zur Hauptbewaffnung kleinkalibrigen Maschinenwaffe.

Bei bekannten Fahrzeugen dieser Art sind an der in der Hauptfahrtrichtung des Fahrzeugs hinten liegenden Heckseite des Waffenturms zudem häufig sog. Heckkästen angeordnet, in welchen je nach Ausstattungsvariante des Fahrzeugs oder auch missionsspezifisch verschiedene Geräte und/oder Ausrüstungsgegenstände untergebracht werden können.

Bekannt aus z.B. DE 20 2015 102347 U1 sind beispielsweise Heckkästen, in denen ein Luftbehandlungsgerät zur Versorgung des Fahrzeuginnenraums mit Frischluft untergebracht ist. Über das Luftbehandlungsgerät kann von außerhalb des Fahrzeugs Frischluft angesaugt und gezielt behandelt werden, bevor diese dann dem Fahrzeuginneren, also dem Inneren der Fahrzeugwanne und/oder dem Inneren des Waffenturms, als Atemluft für die dort untergebrachten Besatzungsmitglieder zugeleitet wird.

Üblicherweise wird das in dem Heckkasten angeordnete Luftbehandlungsgerät über einen an dem Heckkasten als Frischluftzufuhr vorgesehenen Lüftungsschlitz lokal mit Frischluft versorgt. Dies hat sich als eine einfache Möglichkeit zur Frischluftversorgung des Luftbehandlungsgeräts bewährt, kann in bestimmten Situationen jedoch zu Problemen führen. Beispielsweise kann es bei solchen Fahrzeugen, bei welchen neben der Hauptbewaffnung des Waffenturms auch eine Sekundärbewaffnung auf der Oberseite des Waffenturms angeordnet ist, vorkommen, dass durch den Betrieb der Sekundärbewaffnung entstehende Abgase über den Lüftungsschlitz im Bereich des Heckkastens lokal angesaugt werden. Aufgrund dieser lokalen Ansaugung über den Lüftungsschlitz im Bereich des Heckkastens kann es daher vorkommen, dass in bestimmten Situationen stark belastete Frischluft angesaugt wird.

Die vorliegende Erfindung stellt es sich daher zur **Aufgabe**, ein Fahrzeug mit einer verbesserten Frischluftzufuhr anzugeben.

Bei einem Fahrzeug der eingangs genannten Art wird diese Aufgabe durch die Merkmale des Schutzanspruchs 1 **gelöst**.

Der Waffenturm weist einen auf dem Turmdach des Waffenturms angeordneten Dachaufbau mit einer Frischluftzufuhr zur Versorgung des Luftbehandlungsgeräts mit Frischluft auf. Hierdurch ergibt sich die Möglichkeit einer diffusen Frischluftansaugung. Die Gefahr eines Ansaugens lokal belasteter Frischluft, wie diese im Falle einer lokalen, nur in eine Richtung wirkenden Frischluftansaugung besteht, ist durch die im Bereich des Dachaufbaus gegebene Möglichkeit einer diffusen Frischluftansaugung deutlich reduziert.

Vorteilhafte Ausgestaltungen und Weiterbildungen des Fahrzeugs sind in den Unteransprüchen angegeben.

Eine vorteilhafte Ausgestaltung des Fahrzeugs sieht vor, dass der Dachaufbau eine gegenüber dem Turmdach beabstandete Aufbauebene zur Anordnung eines oder mehrerer Anbaugeräte, insbesondere eines Sichtgeräts und/oder einer Sekundärbewaffnung, und/oder zur Anordnung von Dachschutzmodulen aufweist. Auf der Aufbauebene kann ein Sichtgerät und/oder eine Sekundärbewaffnung mit einem Abstand gegenüber dem eigentlichen Turmdach des Waffenturms angeordnet werden. Ebenso können Dachschutzmodule zum Schutz vor militärischen Bedrohungen mit einem gewissen Abstand gegenüber dem Turmdach angeordnet werden.

In diesem Zusammenhang ist es von besonderem Vorteil, wenn die Frischluftzufuhr im Bereich zwischen der Aufbauebene und dem Turmdach vorgesehen ist. Im Bereich zwischen der Aufbauebene und dem Turmdach kann sich eine Art Sandwich-Bauweise ergeben. In dem sich ergebenden Zwischenraum zwischen der Aufbauebene und dem Turmdach kann die Frischluftzufuhr auf vorteilhafte Weise angeordnet werden. Hierdurch ergibt sich im Betrieb des Fahrzeugs auch eine kontinuierliche Hinterlüftung der Aufbauebene. Hierdurch kann sich für den Fahrzeuginnenraum ein verbesserter Wärmehaushalt und/oder auch eine verbesserte Infrarotsignatur des Fahrzeugs ergeben.

Eine in diesem Zusammenhang weiterhin vorteilhafte Ausgestaltung sieht vor, dass die Frischluftzufuhr mehrere Ansaugöffnungen aufweist, wodurch sich eine diffuse Ansaugung der Frischluft an unterschiedlichen Positionen aus unterschiedlichen Richtungen ergibt. Es ergibt sich eine Vielzahl von Teilvolumenströmen an verschiedenen Positionen, die zu einem gemeinsamen Frischluftvolumenstrom zusammengeführt werden. Die Ansaugöffnungen können in unterschiedlichen Richtungen Frischluft ansaugen. Ferner können die Ansaugöffnungen an unterschiedlichen Stellen des Fahrzeugs positioniert sein. Eine lokal konzentrierte Ansaugung aus nur einer Richtung wird vermieden. Es ergibt sich eine diffuse Ansaugung. Auch die Gefahr einer Verstopfung der Ansaugöffnungen durch angesaugtes Material, etwa Blätter oder ähnliche Gegenstände, wird reduziert.

Eine weitere vorteilhafte Ausgestaltung sieht vor, dass die Ansaugöffnungen spaltförmig ausgebildet sind. Aufgrund der Spaltform wird die Gefahr eines ungewollten Ansaugens größerer Verunreinigungen, wie etwa Blätter, Äste o. Ä. reduziert. Es besteht nicht die Gefahr, dass gröbere Verunreinigungen angesaugt und in das System hineingetragen werden.

In vorteilhafter Weise können sich die Ansaugöffnungen in vertikaler Richtung erstrecken. Die dazwischen liegenden Bereiche können als eine Art Ständer zur Aufständerung der Aufbauebene gegenüber dem Turmdach dienen und die auf dem Dachaufbau angeordneten Komponenten, etwa eine Sekundärbewaffnung, ein Sichtgerät o. Ä. tragen. Auch können sich die Ansaugöffnungen im Wesentlichen in vertikaler Richtung erstrecken. In diesem Fall weisen die Ansaugöffnungen eine gewisse Ausrichtung quer zur vertikalen auf, was bei gewissen Dachaufbauten ebenfalls vorteilhaft sein kann.

Eine weitere vorteilhafte Ausgestaltung sieht vor, dass sich die Ansaugöffnungen, jeweils zumindest teilweise, entlang zweier Seitenflächen und/oder einer Heckfläche und/oder einer Frontfläche des Dachaufbaus erstrecken. Auch dies ist einer diffusen Ansaugung der Frischluft an unterschiedlichen Positionen des Fahrzeugs zuträglich.

Eine weitere vorteilhafte Ausgestaltung sieht vor, dass die Frischluftversorgung über einen Strömungskanal mit dem Luftbehandlungsgerät strömungsverbunden ist. Über das Luftbehandlungsgerät kann ein Unterdruck zum Ansaugen der Frischluft erzeugt werden. Dieser Unterdruck kann über den Strömungskanal in den Bereich des Dachaufbaus geführt und dort zum Ansaugen der Frischluft über die Frischluftzufuhr genutzt werden. Im Inneren des Strömungskanals kann ein Filter zum Filtern der angesaugten Frischluft angeordnet sein.

Von konstruktivem Vorteil ist eine Ausgestaltung, nach welcher sich der Strömungskanal entlang des Turmdachs bis in einen Bereich oberhalb des Heckkastens erstreckt. Insbesondere kann der Strömungskanal parallel zum Turmdach verlaufen.

Eine beispielsweise zu Wartungszwecken vorteilhafte Ausgestaltung sieht vor, dass der Heckkasten um eine sich in vertikaler Richtung erstreckende Schwenkachse schwenkbar gegenüber dem Waffenturm angeordnet ist. Auf diese Weise lässt sich der Heckkasten beispielsweise zu Wartungszwecken von dem Waffenturm weg in eine Wartungsstellung verschwenken und Wartungsarbeiten an den im innenliegenden Bereich des Heckkastens vorgesehenen Komponenten, insbesondere an dem Luftbehandlungsgerät, durchführen. Auch können Reinigungsarbeiten an den luftführenden Elementen durchgeführt werden. In der Betriebsstellung des Heckkastens, in welcher dieser an dem Waffenturm anliegt, ergibt sich eine wasserdichte Anlage. Hierzu kann eine entsprechende Dichtung vorgesehen sein. Dies erlaubt auch eine Unterwasserfahrt des Fahrzeugs, ohne dass Wasser im Bereich des Heckkastens in den Heckkasten und/oder den Waffenturm eindringen kann.

In diesem Zusammenhang ist weiterhin von Vorteil, wenn der Strömungskanal einen ersten, turmfest angeordneten Abschnitt und einen zweiten gemeinsam mit dem Heckkasten gegenüber dem Waffenturm verschwenkbaren Abschnitt aufweist. Über die beiden Abschnitte lässt sich die Frischluft in den Bereich des Heckkastens ansaugen. Vorteilhafterweise kann der zweite Abschnitt des Strömungskanals wasserdicht abgedichtet werden, was für den Fall einer Unterwasserfahrt vorteilhaft ist. Der zweite Abschnitt des Strömungskanals kann auch als eine Hutze ausgebildet sein. In diesem Fall ergibt sich eine konstruktiv einfache Konstruktion, bei welcher der zweite Abschnitt des Strömungskanals auf eine Hutze reduziert ist und keine weiteren Strömungskanäle u. Ä. vorgesehen sind.

Eine besonders vorteilhafte Ausgestaltung sieht vor, dass der Strömungskanal, und insbesondere der gemeinsam mit dem Heckkasten verschwenkbare zweite Abschnitt des Strömungskanals, über eine Durchströmöffnung mit dem Luftbehandlungsgerät strömungsverbunden ist. Die Durchströmöffnung kann in der Oberseite des Heckkastens ausgebildet sein. Die Durchströmöffnung kann am ansaugseitigen Ende des Strömungskanals angeordnet sein.

Eine weitere vorteilhafte Ausgestaltung sieht vor, dass die Durchströmöffnung an der Oberseite des Heckkastens oberhalb eines Einbauraums des Luftbehandlungsgeräts in dem Heckkasten angeordnet ist. Über die Durchströmöffnung kann das Luftbehandlungsgerät Frischluft in den Heckkasten einsaugen.

Eine besonders vorteilhafte Ausgestaltung sieht vor, dass die Durchströmöffnung manuell schließbar ausgebildet ist. Die Durchströmöffnung kann zwischen deren geöffneter Betriebsstellung und der geschlossenen Stellung manuell überführt werden. Hierzu kann die Durchströmöffnung von Hand oder mittels eines Werkzeugs betätigbar sein, welches in entsprechende Werkzeugflächen, etwa einen Schlüsselansatz zum Eingriff eines Schlüsselwerkzeugs, eingreifen kann. Die Durchströmöffnung kann ein gegenüber der Oberseite des Heckkastens erhabenes Außengewinde aufweisen und über einen Deckel mit partiell eingreifenden Gewindenocken verschlossen werden. Hierdurch ergibt sich ein umlaufender nur im Bereich der Gewindenocken versperrter Ringspalt, der den Ansaugquerschnitt ergibt.

Eine im Hinblick auf eine mögliche Unterwasserfahrt des Fahrzeugs vorteilhafte Ausgestaltung sieht vor, dass die Durchströmöffnung in deren geschlossener Stellung wasserdicht gegenüber dem Heckkasten abgedichtet ist. Auch durch diese Abdichtung wird sichergestellt, dass während einer Unterwasserfahrt keine Feuchtigkeit in das System eindringt. Die beiden Endpositionen der Hutze, d. h. deren geöffnete Stellung und deren geschlossene Stellung, können mittels Arretierbolzen fixierbar ausgebildet sein.

Ein konstruktiv vorteilhafte Ausgestaltung sieht vor, dass die Durchströmöffnung über eine Schlauchleitung mit dem Luftbehandlungsgerät verbunden ist.

Eine weitere konstruktiv vorteilhafte Ausgestaltung sieht vor, dass die Durchströmöffnung als Hutze ausgebildet ist.

Eine weitere vorteilhafte Ausgestaltung sieht vor, dass die Hutze eine Entlüftung zur Entlüftung des Einbauraums des Luftbehandlungsgeräts in dem Heckkasten mit abdeckt.

Um auch ein Eindringen von Regen- oder Spritzwasser zu vermeiden, wird ferner vorgeschlagen, dass die Hutze mit einer Wasserfalle zur Vermeidung ungewünschten Wassereintrags versehen ist. Die Wasserfalle kann derart ausgestaltet sein, dass Wasser bis zu einer bestimmten Wasserstandhöhe nicht in die Hutze eintreten kann.

Ferner wird vorgeschlagen, dass es sich bei dem Luftbehandlungsgerät um eine AC- und/oder CBRN-Anlage handelt. Über die AC ("Air Condition") -Anlage kann die Frischluft klimatisiert werden, was insbesondere bei Fahrzeugmissionen in sehr warmen Regionen von Vorteil ist. Über die CBRN-Anlage kann die angesaugte Frischluft zum Schutz der Fahrzeugbesatzung vor CBRN-Bedrohungen (chemisch, biologisch, radiologisch, nuklear) gereinigt werden.

Weitere Vorteile und Einzelheiten eines erfindungsgemäßen Fahrzeugs sollen nachfolgend anhand der beigefügten Abbildungen eines Ausführungsbeispiels erläutert werden. Darin zeigen:
- Fig. 1: eine perspektivische Ansicht eines Fahrzeugs,
- Fig. 2: eine der Darstellung des Fahrzeugs in Fig. 1 entsprechende Ansicht, in welcher der Blick auf einige innenliegende Komponenten freigegeben ist,
- Fig. 3: in schematischer Schnittansicht einen Bereich des Dachs des Waffenturms,
- Fig. 4: eine der Darstellung in Fig. 3 entsprechende Ansicht zur Veranschaulichung der Luftströmung und
- Fig. 5: eine weitere schematische Schnittansicht im Bereich der Durchströmöffnung zur Veranschaulichung einer Entlüftung.

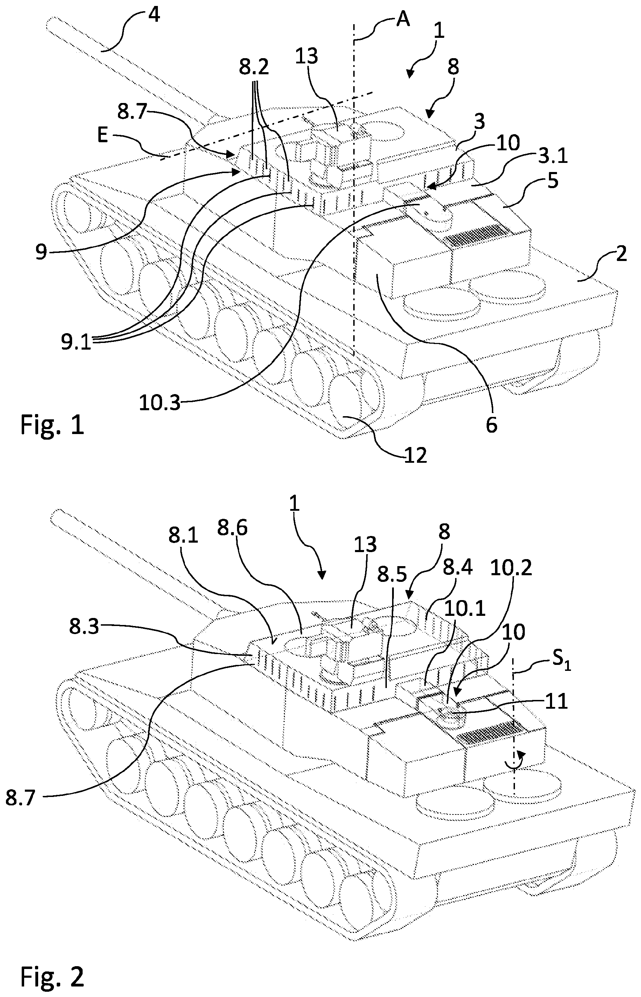

Fig. 1 zeigt in perspektivischer, schematisch gehaltener Ansicht ein Fahrzeug 1, bei welchem es sich um ein kettengetriebenes Militärfahrzeug handelt.

Das Fahrzeug 1 weist eine Fahrzeugwanne 2 auf. Die Fahrzeugwanne 2 wird von einem Kettenfahrwerk 12 getragen und dient zur Aufnahme der Besatzung des Fahrzeugs 1. Um die im Inneren der Fahrzeugwanne 2 aufgenommene Fahrzeugbesatzung vor militärischen Bedrohungen zu schützen, ist die Fahrzeugwanne 2 gepanzert ausgebildet.

Oberhalb der Fahrzeugwanne 2 befindet sich ein Waffenturm 3, welcher eine Waffe 4 trägt. Bei der Waffe 4 handelt es sich um die Hauptbewaffnung des Fahrzeugs 1. Im Ausführungsbeispiel ist die Waffe 4 als eine großkalibrige Kanone ausgebildet. Um die Waffe 4 in Azimut richten zu können, ist der Waffenturm 3 gegenüber der Fahrzeugwanne 2 um eine Azimutrichtachse A richtbar an der Fahrzeugwanne 2 angeordnet. Die Azimutrichtachse A erstreckt sich in vertikaler Richtung. Die Waffe 4 ist zudem um eine Elevationsrichtachse E richtbar an dem Waffenturm 3 gelagert, wodurch diese sowohl in Elevation als auch Azimut richtbar ist.

Bei dem in Fig. 1 dargestellten Fahrzeug 1 handelt es sich um einen Kampfpanzer. Die Fahrzeugbesatzung des Fahrzeugs 1 ist sowohl in der Fahrzeugwanne 2 als auch in dem Waffenturm 3 untergebracht, welcher zu diesem Zweck als ein Korbturm mit einem in die Wanne 2 hineinreichenden Korb zur Aufnahme eines Besatzungsmitglieds ausgebildet ist. Da der Waffenturm 3 bemannt ausgebildet ist, ist auch der Waffenturm 3 zum Schutz vor militärischen Bedrohungen gepanzert ausgebildet. Alternativ wäre es auch denkbar, dass der Waffenturm 3 unbemannt ausgebildet und aus dem Inneren der Fahrzeugwanne 2 heraus fernbedienbar ausgebildet ist. In diesem Fall könnte der Waffenturm 3 aus Gewichtsgründen weniger stark gepanzert sein.

Um eine gestufte Waffenwirkung zu erreichen, weist das Fahrzeug 1 nicht nur die als Hauptbewaffnung dienende Waffe 4, sondern auch eine Sekundärbewaffnung 13 auf. Bei der Sekundärbewaffnung 13 handelt es sich um eine aus dem Inneren des Fahrzeugs 1 heraus fernbedienbar auf dem Waffenturm 3 angeordnete Waffenstation, in welcher eine beispielsweise mittelkalibrige Maschinenwaffe, ein Granatwerfer oder eine andere Sekundärwaffe aufgenommen sein kann.

Wie die Darstellung in Fig. 1 dies zudem erkennen lässt, ist der Waffenturm 3 von insgesamt länglicher Geometrie. Am in Hauptfahrtrichtung des Fahrzeug 1 vorderen Frontbereich des Waffenturms 3 ist die Waffe 4 angeordnet. Am in Hauptfahrtrichtung des Fahrzeugs 1 hinteren Heckbereich des Waffenturms 3 sind beim Ausführungsbeispiel zwei Heckkästen 5, 6 vorgesehen. Der Heckkasten 5 ist in den Figuren in der Betriebsstellung dargestellt, in welcher dieser am Heckbereich des Waffenturms anliegt. Der Heckkasten 5 ist schwenkbar an dem Waffenturm 3 angeordnet und kann aus der Betriebsstellung durch Verschwenken in eine Wartungsstellung vom Waffenturm 3 weg geschwenkt werden. Hierzu weist der Heckkasten 5 eine Schwenkachse S₁ auf. Die Schwenkachse S₁ erstreckt sich in vertikaler Richtung und ist seitlich an dem Waffenturm 3 angeordnet.

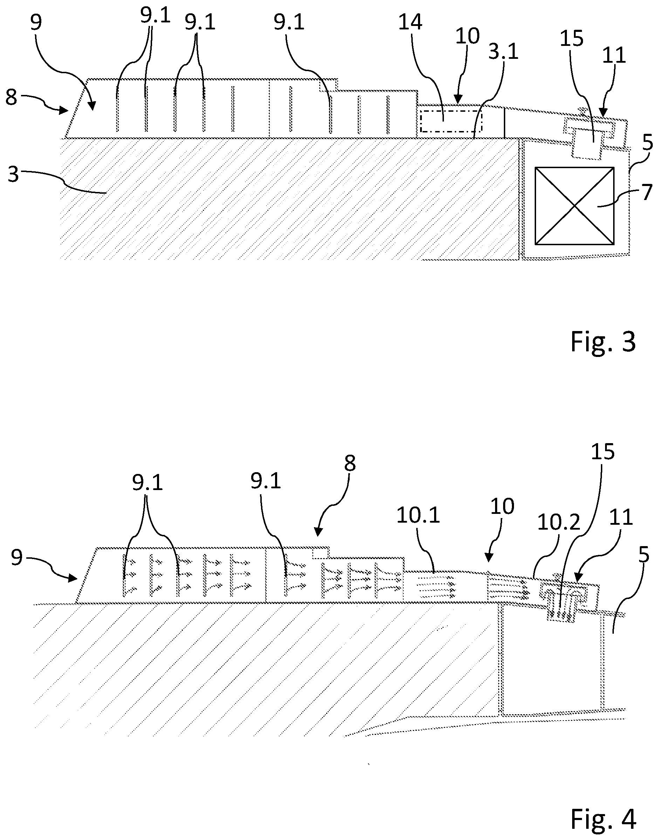

Die Heckkästen 5, 6 dienen zur Unterbringung verschiedener Geräte und/oder Ausrüstungsgegenstände. Beim Ausführungsbeispiel ist in dem in Fahrtrichtung auf der rechten Fahrzeugseite angeordneten Heckkasten 5 ein Luftbehandlungsgerät 7 untergebracht, über welches Frischluft angesaugt, gezielt behandelt und anschließend dem Fahrzeuginneren zugeführt werden kann, vgl. auch Fig. 3 und 4. Im Fahrzeuginneren kann die angesaugte Frischluft dann beispielsweise als Atemluft für die im Inneren des Fahrzeugs 1 untergebrachten Besatzungsmitglieder genutzt zu werden. Im in Fig. 1 linken, als Staukasten ausgebildeten Heckkasten 6 sind hingegen Ausrüstungsgegenstände, wie etwa Werkzeug, Spanngurte, Ersatzteile oder ähnliche Gegenstände, angeordnet.

Wie die Darstellung in Fig. 1 dies weiter erkennen lässt, befindet sich auf dem Dach 3.1 des Waffenturms 3 ein die Dachfläche 3.1 erhöhender Dachaufbau 8. Der Dachaufbau 8 ist nach Art einer Dachhaube gestaltet. Der Dachaufbau 8 erstreckt sich im mittleren Bereich des Waffenturms 3, wohingegen der Frontbereich des Waffenturms 3, wie auch der Heckbereich des Waffenturms 3 keinen Dachaufbau 8 aufweisen. Alternativ könnte sich der Dachaufbau 8 aber auch über andere Teilbereiche des Waffenturms 3 oder auch über den gesamten Waffenturm 3 erstrecken.

Als wesentliches Element weist der Dachaufbau 8 eine Aufbauebene 8.1 auf. Auf der Aufbauebene 8.1 des Dachaufbaus 8 ist die Sekundärbewaffnung 13 angeordnet. Die Aufbauebene 8.1 erstreckt sich im Wesentlichen parallel zum Turmdach 3.1 des Waffenturms 3. Zu dessen Rändern hin ist der Dachaufbau 8 im Bereich der beiden Seitenflächen 8.3, 8.4, wie auch der Frontfläche 8.6 sowie der Heckfläche 8.5 über eine umlaufend ausgebildete Seitenwand 8.7 geschlossen.

Wie dies nachfolgend noch näher erläutert werden wird, befindet sich im Bereich des Dachaufbaus 8 eine Frischluftzufuhr 9 zur Versorgung des in dem Heckkasten 5 untergebrachten Luftbehandlungsgeräts 7 mit Frischluft.

Die Frischluftzufuhr 9 wird gebildet von einer Vielzahl Ansaugöffnungen 9.1, die in der Seitenwand 8.7 ausgebildet sind. Beim Ausführungsbeispiel sind die Ansaugöffnungen 9.1 über die Seitenflächen 8.3, 8.4 sowie die Heckfläche 8.5 des Dachaufbaus 8 verteilt angeordnet sind. Die Ansaugöffnungen 9.1 sind von schlitzförmiger Geometrie. Die Ansaugöffnungen 9.1 erstrecken sich in im Wesentlichen senkrechter Richtung. Die zwischen den Ansaugöffnungen 9.1 der Frischluftzufuhr 9 verbleibenden Bereiche der Seitenwand 8.7 des Dachaufbaus 8 bilden Aufbauständer 8.2. Die Aufbauständer 8.2 erstrecken sich von dem Turmdach 3.1 durchgängig bis hin zur Aufbauebene 8.1 des Dachaufbaus 8. Die Aufbauständer 8.2 dienen als Tragelemente zur Abstützung der Aufbauebene 8.1 sowie der darauf angeordneten Gegenstände, insbesondere der darauf angeordneten Sekundärbewaffnung 13, etwaiger Luken, Optiken oder ähnlicher Gegenstände.

Die Aufbauständer 8.2 können auch als Wände oder Stege, insbesondere als partiell durchgehende Wände oder Stege, ausgebildet sein und derart angeordnet sein, dass in Bereich zwischen dem Turmdach 3.1 und der Aufbauebene 8.1 ein Innenraum entsteht. Der Innenraum kann zur Seite hin über die Wände oder Stege geschlossen sein. Der so gebildete Innenraum kann beispielsweise als zusätzlichen Stauraum genutzt werden, etwa zur Verstauung von Zubehör, Elektroniken und/oder anderen Funktionsbaugruppen. Um den entsprechenden Innenraum zugänglich zu halten, kann in dem darüberliegenden Bereich des Dachaufbaus 8 in der Aufbauebene 8.1 ein Deckel, eine Klappe o. Ä. angeordnet werden.

Wie die Darstellungen in den Fig. 3 und Fig. 4 dies ferner erkennen lassen, ist das schematisch eingezeichnete Luftbehandlungsgerät 7 innerhalb eines Einbauraums des Heckkastens 5 angeordnet. Über das Luftbehandlungsgerät 7 wird ein Unterdruck zur Ansaugung von Frischluft erzeugt, welche dem sich ergebenden Druckgefälle folgend in das Luftbehandlungsgerät 7 gesaugt wird.

Bei dem Luftbehandlungsgerät 7 handelt es sich beim Ausführungsbeispiel um ein solches Luftbehandlungsgerät, mit welchem sich sowohl CBRN-Bedrohungen filtern als auch eine Klimatisierung der angesaugten Frischluft erreichen lässt. Das Luftbehandlungsgerät 7 erfüllt insoweit eine Doppelfunktion. Denn zum Schutz der Fahrzeugbesatzung vor CBRN-Bedrohungen ist dieses als CBRN-Gerät ausgebildet. Ferner dient es der Temperierung, indem das Luftbehandlungsgerät 7 auch als AC-Gerät bzw. Klimagerät ausgebildet ist.

Um die Gefahr eines Ansaugens lokal verunreinigter Frischluft, etwa aufgrund bei der Betätigung der Sekundärbewaffnung 13 entstehender Abgase geringzuhalten, ist die Frischluftansaugung 9 derart ausgebildet, dass die Frischluft diffus angesaugt wird. Über die Frischluftansaugung 9 wird die Frischluft an mehreren, voneinander beabstandeten Ansaugöffnungen 9.1 aus verschiedenen Richtungen angesaugt, vgl. Fig. 4. Hierdurch ergibt sich eine insgesamt diffuse Ansaugung mit einer reduzierten Gefahr einer belasteten Frischluftansaugung.

Wie die Darstellungen in den Fig. 3 und Fig. 4 dies weiter erkennen lassen, ist das Luftbehandlungsgerät 7 über einen Strömungskanal 10 mit dem Dachaufbau 8 bzw. der an dem Dachaufbau 8 angeordneten Frischluftversorgung 9 strömungsverbunden. Der Strömungskanal 10 erstreckt sich von einem Bereich oberhalb des Luftbehandlungsgeräts 7 bis hin zum Dachaufbau 8. Bei dem Strömungskanal 10 handelt es sich um einen geschlossenen Kanal, dessen eines Ende in den Dachaufbau 8 mündet. Das andere Ende des Strömungskanals 10 wird von einer als Hutze 11 ausgebildeten Durchstömöffnung 15 an der Oberseite jenes Heckkastens 5 gebildet, in welchem das Luftbehandlungsgerät 7 untergebracht ist. Anstelle einer Hutze 11 wäre hier auch eine einfache Öffnung denkbar.

Die Hutze 11 bietet jedoch den Vorteil, dass diese bei Bedarf geschlossen werden kann, was im Falle einer Unterwasserfahrt den Vorteil mit sich bringt, dass keine Flüssigkeit in den Heckkasten 5 eintreten kann. Ferner kann die Hutze 11 mit einer Wasserfalle ausgestaltet sein, damit auch Regenwasser oder anderweitiges Spritzwasser nicht in das Innere des Heckkastens 5 eintreten kann.

Die Hutze 11 weist einen Deckel 11.1 und einen Rohrstutzen 11.2 auf. Der Rohrstutzen 11.2 bildet die eigentliche Durchströmöffnung 15. Der Deckel 11.1 ist gegenüber dem Rohrstutzen 11.2 in axialer Richtung der Rohrachse des Rohrstutzens 11.2 manuell bewegbar. Zum Bewegen des Deckels 11.1 gegenüber dem Rohrstutzen 11.2 sind diese über zwei Gewindeabschnitte 11.7, 11.8 derart miteinander verbunden, dass eine Drehung des Deckels 11.1 gegenüber dem feststehenden Rohrstutzen 11.2 in eine Axialbewegung des Deckels 11.1 überführt wird. Bei dem an dem Deckel 11.1 angeordneten Gewindeabschnitt 11.7 handelt es sich um einen Innengewindeabschnitt. Der Gewindeabschnitt 11.7 erstreckt sich nicht über den gesamten Umfang des Deckels 11.1, sondern ist an mehreren über den Umfang des Deckels 11.1 verteilt angeordneten, nach Art von Gewindenocken ausgestalteten Nocken 11.6 angeordnet. Beim Ausführungsbeispiel sind insgesamt drei Nocken 11.6 vorgesehen. Hierdurch kann in einer Offenstellung des Deckels 11.1 ein nahezu ungestörtes Durchströmen der Hutze 11 mit Frischluft F erreicht werden. Der Gewindeabschnitt 11.7 wirkt mit einem an dem Rohrstutzen 11.2 vorgesehenen Gewindeabschnitt 11.8 zusammen. Der Gewindeabschnitt 11.8 ist als Außengewindeabschnitt ausgestaltet.

Der Deckel 11.1 ist von der Offenstellung, in welche die Frischluft F die Hutze 11 durchströmen kann, in eine Schließstellung bewegbar, in welcher die Hutze 11 geschlossen ist. In der Offenstellung weist der Deckel 11.1 einen Abstand gegenüber dem Rohrstutzen 11.2 auf. In dieser Stellung kann die Frischluft F in den Bereichen zwischen den Nocken 11.6 in die Hutze 11 eintreten. In der Schließstellung liegt der Deckel 11.1 an dem Rohrstutzen 11.2 an. Im Anlagebereich zwischen dem Deckel 11.1 und dem Rohrstutzen 11.2 ist eine Dichtung 11.3 vorgesehen. Die Dichtung 11.3 ist beim Ausführungsbeispiel als O-Ring-Dichtung ausgeführt und in einer Nut des Deckels 11.1 angeordnet. In der geschlossenen Stellung der Hutze 11 ist diese über die Dichtung 11.3 wasserdicht verschlossen.

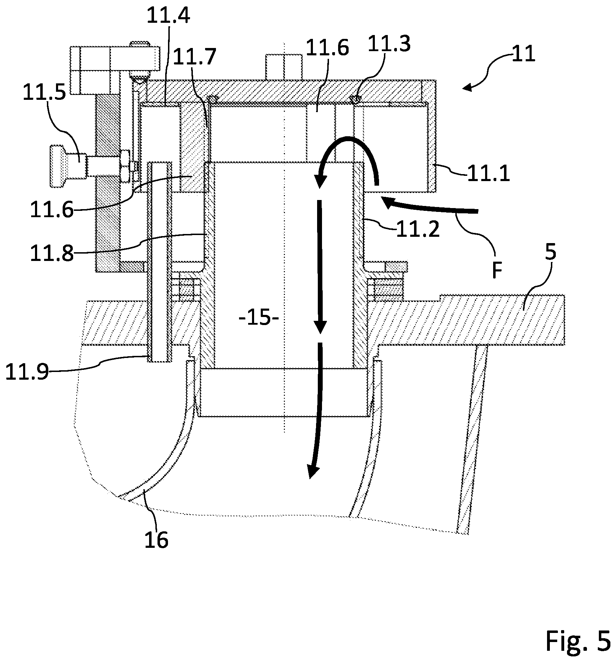

Wie die Darstellung in Fig. 5 dies zudem erkennen lässt, weist die Hutze 11 eine Entlüftung 11.9 auf. Die Entlüftung 11.9 ist als Rohr ausgebildet. Die Entlüftung 11.9 erstreckt sich parallel zu dem Rohrstutzen 11.2. Die Entlüftung 11.9 weist einen geringeren Durchmesser als der Rohrstutzen 11.2 auf. Die Entlüftung 11.9 dient dazu, den Einbauraum des Luftbehandlungsgeräts 7 zu belüften. Durch die Integration der Entlüftung 11.9 in die Hutze 11 reduzieren sich die äußeren Konturen des Heckkastens 5 und zur Unterwasserfahrt können sowohl der Rohrstutzen 11.2 als auch die Entlüftung 11.9 mit einem Handgriff verschlossen werden. Die Entlüftung 11.9 ist unterhalb des Deckels 11.1 angeordnet. Die axiale Länge der Entlüftung 11.9 ist zudem derart an die axiale Länge des Rohrstutzens 11.2 sowie die Geometrie des Deckels 11.1 angepasst, dass der Deckel 11.1 in dessen Schließstellung sowohl die Entlüftung 11.9 als auch den Rohrstutzen 11.2 verschließt. Zum Abdichten der Entlüftung 11.9 ist an dem Deckel 11.1 eine Dichtung 11.4 vorgesehen. Die Dichtung 11.4 ist als ringförmige Flachdichtung ausgebildet und an der Unterseite des Deckels 11.1 angeordnet. Die Entlüftung 11.9 kann auch im Einbauraum des Luftbehandlungsgeräts 7 als Öffnung in Form einer Querbohrung an der Durchströmöffnung 15 ausgeführt sein.

Um die Hutze 11 in der Offenstellung und/oder der Schließstellung gegen ungewolltes Bewegen zu sichern, weist diese ein Arretierelement 11.5 auf. Das Arretierelement 11.5 ist nach Art eines entgegen der Kraft einer sich spannenden Feder bewegbaren Arretierbolzens ausgestaltet, der in der Offenstellung und/oder der Schließstellung mit dem Deckel 11.1 selbsttätig verrastet. In der verrasteten Stellung greift das Arretierelement formschlüssig in deren Deckel 11.1 ein. Der Deckel 11.1 lässt sich daher nur nach manuellem Lösen des Arretierelements 11.5 drehen.

Wie die Darstellungen in den Fig. 3 und 4 dies weiter erkennen lassen, weist der Strömungskanal 10 einen turmfesten Abschnitt 10.1 und einen gemeinsam mit dem Heckkasten 5 verschwenkbaren Abschnitt 10.2 auf. Einer oder beide Abschnitte 10.1, 10.2 des Strömungskanals können über eine Abdeckung 10.3 abgedeckt sein. Die Abdeckung 10.3 kann nach Art einer Abdeckhaube ausgestaltet sein.

In der etwa in Fig. 2 dargestellten Betriebsstellung liegen die beiden Abschnitte 10.1, 10.2 des Strömungskanals dicht aneinander an. Hierzu kann im Bereich zwischen den beiden Abschnitten 10.1, 10.2 eine Dichtung vorgesehen sein. Hierdurch wird ein ungewolltes Ansaugen von Frischluft oder ein Partikeleintrag im Bereich zwischen den beiden Abschnitten 10.1, 10.2 des Strömungskanals 10 vermieden.

Das Luftbehandlungsgerät 7 erzeugt einen Unterdruck innerhalb des Hecckastens 5, welcher über den Strömungskanal 10 in den Dachaufbau 8 weitergeleitet und dort zum Ansaugen frischer Luft über die Ansaugöffnungen 9.1 der Frischluftzufuhr 9 genutzt wird, vgl. Fig. 4.

Aufgrund der schlitzförmigen Geometrie der Ansaugöffnungen 9.1 wird auch die Gefahr eines Ansaugens gröberer Verunreinigungen, wie Laub, Ästen o. Ä. reduziert. Zum Ausfiltern feinerer Verunreinigungen ist ein Filter 14 vorgesehen. Der Filter 14 ist im Strömungskanal 10 angeordnet. Beim Ausführungsbeispiel befindet sich der Filter 14 im turmfesten Abschnitt 10.1 des Strömungskanals 10. und der Filter 14 kann erforderlichenfalls entweder gereinigt oder gegen einen frischen Filter 14 ersetzt werden.

Durch die an dem Dachaufbau vorgesehene Frischluftansaugung 9 ergibt sich eine diffuse Ansaugung von Frischluft an verschiedenen Stellen und aus verschiedenen Richtungen. Die Gefahr einer Ansaugung verunreinigter Frischluft wird gegenüber einer lokalen Frischluftansaugung deutlich reduziert. Die Volumenströme der einzelnen Ansaugöffnungen 9.1 addieren sich zu einem einzigen Frischluftstrom, der ausreicht, die gewünschte Frischluftversorgung für das Innere des Fahrzeugs 1 bereitzustellen.

### Bezugszeichen:

- 1: Fahrzeug
- 2: Fahrzeugwanne
- 3: Waffenturm
- 3.1: Turmdach
- 4: Waffe
- 5: Heckkasten
- 6: Heckkasten
- 7: Luftbehandlungsgerät
- 8: Dachaufbau
- 8.1: Aufbauebene
- 8.2: Aufbauständer
- 8.3: Seitenfläche
- 8.4: Seitenfläche
- 8.5: Heckfläche
- 8.6: Frontfläche
- 8.7: Seitenwand
- 9: Frischluftzufuhr
- 9.1: Ansaugöffnung
- 10: Strömungskanal
- 10.1: Abschnitt
- 10.2: Abschnitt
- 10.3: Abdeckung
- 11: Hutze
- 11.1: Deckel
- 11.2: Rohrstutzen
- 11.3: Dichtung
- 11.4: Dichtung
- 11.5: Arretierelement
- 11.6: Nocken
- 11.7: Gewindeabschnitt
- 11.8: Gewindeabschnitt
- 11.9: Entlüftung
- 12: Kettenfahrwerk
- 13: Sekundärbewaffnung
- 14: Filter
- 15: Durchströmöffnung
- 16: Schlauchleitung

- A: Azimutrichtachse
- E: Elevationsrichtachse
- S₁: Schwenkachse
- F: Frischluft

## Patentansprüche

1. Fahrzeug, insbesondere militärisches Kampffahrzeug, mit einer Fahrzeugwanne (2) und einem oberhalb der Fahrzeugwanne (2) um eine Azimutrichtachse (A) drehbar angeordneten, eine Waffe (4) aufnehmenden Waffenturm (3), an dessen Heckseite mindestens ein Hecckasten (5) mit einem Luftbehandlungsgerät (7) zur Dekontamination und/oder Temperierung der Fahrzeuginnenluft angeordnet ist, **dadurch gekennzeichnet,**
**dass** der Waffenturm (3) einen auf dem Turmdach (3.1) des Waffenturms (3) aufgebauten Dachaufbau (8) mit einer Frischluftzufuhr (9) zur Versorgung des Luftbehandlungsgeräts (7) mit Frischluft (F) aufweist.

2. Fahrzeug nach Anspruch 1, **dadurch gekennzeichnet, dass** der Dachaufbau (8) eine gegenüber dem Turmdach (3.1) beabstandete Aufbauebene (8.1) zur Anordnung eines Anbaugeräts, insbesondere eines Sichtgeräts und/oder einer Sekundärbewaffnung (13), und/oder zur Anordnung von Dachschutzmodulen aufweist.

3. Fahrzeug nach Anspruch 2, **dadurch gekennzeichnet, dass** die Frischluftzufuhr (9) im Bereich zwischen der Aufbauebene (8.1) und dem Turmdach (3.1) vorgesehen ist.

4. Fahrzeug nach einem der vorhergehenden Ansprüche, **dadurch gekennzeichnet, dass** die Frischluftzufuhr (9) mehrere Ansaugöffnungen (9.1) aufweist.

5. Fahrzeug nach Anspruch 4, **dadurch gekennzeichnet, dass** die Ansaugöffnungen (9.1) spaltförmig ausgebildet sind.

6. Fahrzeug nach Anspruch 5, **dadurch gekennzeichnet, dass** sich die Ansaugöffnungen (9.1) in vertikaler Richtung erstrecken.

7. Fahrzeug nach einem der Ansprüche 4 bis 6, **dadurch gekennzeichnet, dass** sich die Ansaugöffnungen (9.1), jeweils zumindest teilweise, entlang zweier Seitenflächen (8.3, 8.4) und/oder einer Heckfläche (8.5) und/oder einer Frontfläche (8.6) des Dachaufbaus (8) erstreckt.

8. Fahrzeug nach einem der vorhergehenden Ansprüche, **dadurch gekennzeichnet, dass** die Frischluftversorgung (9) über einen Strömungskanal (10) mit dem Luftbehandlungsgerät (7) strömungsverbunden ist.

9. Fahrzeug nach Anspruch 8, **dadurch gekennzeichnet, dass** sich der Strömungskanal (10) entlang des Turmdachs (3.1) bis in einen Bereich oberhalb des Heckkastens (5) erstreckt.

10. Fahrzeug nach einem der vorhergehenden Ansprüche, **dadurch gekennzeichnet, dass** der Heckkasten (5) um eine sich in vertikaler Richtung erstreckende Schwenkachse (S₁) schwenkbar gegenüber dem Waffenturm (3) angeordnet ist.

11. Fahrzeug nach Anspruch 10, **dadurch gekennzeichnet, dass** der Strömungskanal (10) einen ersten, turmfest angeordneten Abschnitt (10.1) und einen gemeinsam mit dem Heckkasten (5) gegenüber dem Waffenturm (3) verschwenkbaren, zweiten Abschnitt (10.2) aufweist.

12. Fahrzeug nach einem der Ansprüche 8 bis 11, **dadurch gekennzeichnet, dass** der Strömungskanal (10), und insbesondere der verschwenkbare Abschnitt (10.2) des Strömungskanals (10), über eine Durchströmöffnung (15) mit dem Luftbehandlungsgerät (7) strömungsverbunden ist.

13. Fahrzeug nach Anspruch 12, **dadurch gekennzeichnet, dass** die Durchströmöffnung (15) an der Oberseite des Heckkastens (5) oberhalb eines Einbauraums des Luftbehandlungsgeräts (7) in dem Hecckasten (5) angeordnet ist.

14. Fahrzeug nach einem der Ansprüche 12 oder 13, **dadurch gekennzeichnet, dass** die Durchströmöffnung (15) manuell schließbar ausgebildet ist.

15. Fahrzeug nach Anspruch 14, **dadurch gekennzeichnet, dass** die Durchströmöffnung (15) in deren geschlossener Stellung wasserdicht gegenüber dem Heckkasten (5) abgedichtet ist.

## Claims

1. Vehicle, in particular military combat vehicle, with a vehicle hull (2) and a weapon turret (3) arranged above the vehicle hull (2) so as to be rotatable about an azimuth axis (A) and accommodating a weapon (4), at the rear of which at least one rear box (5) with an air treatment device (7) for decontaminating and/or temperature-regulating the vehicle interior air is arranged,
**characterized in that**
the weapon turret (3) has a roof structure (8) built on the turret roof (3.1) of the weapon turret (3) with a fresh air supply (9) for supplying fresh air (F) to the air treatment device (7).

2. Vehicle according to claim 1, **characterized in that** the roof structure (8) has a mounting level (8.1) spaced apart from the turret roof (3.1) for arranging an attachment, in particular a viewing device and/or secondary armament (13), and/or for arranging roof protection modules.

3. Vehicle according to claim 2, **characterized in that** the fresh air supply (9) is provided in the area between the mounting level (8.1) and the turret roof (3.1).

4. Vehicle according to one of the preceding claims, **characterized in that** the fresh air supply (9) has several intake openings (9.1).

5. Vehicle according to claim 4, **characterized in that** the intake openings (9.1) are designed in a slit shape.

6. Vehicle according to claim 5, **characterized in that** the intake openings (9.1) extend in a vertical direction.

7. Vehicle according to one of claims 4 to 6, **characterized in that** the intake openings (9.1) extend, at least partially, along two side surfaces (8.3, 8.4) and/or a rear surface (8.5) and/or a front surface (8.6) of the roof structure (8).

8. Vehicle according to one of the preceding claims, **characterized in that** the fresh air supply (9) is connected to the air treatment device (7) via a flow channel (10).

9. Vehicle according to claim 8, **characterized in that** the flow channel (10) extends along the tower roof (3.1) into an area above the rear box (5).

10. Vehicle according to one of the preceding claims, **characterized in that** the rear box (5) is arranged so as to be pivotable relative to the weapon tower (3) about a pivot axis (Si) extending in the vertical direction.

11. Vehicle according to claim 10, **characterized in that** the flow channel (10) has a first section (10.1) fixed to the turret and a second section (10.2) which can be pivoted together with the rear box (5) relative to the weapon turret (3).

12. Vehicle according to one of claims 8 to 11, **characterized in that** the flow channel (10), and in particular the pivotable section (10.2) of the flow channel (10), is connected to the air treatment device (7) via a flow opening (15).

13. Vehicle according to claim 12, **characterized in that** the flow opening (15) is arranged on the upper side of the rear box (5) above an installation space for the air treatment device (7) in the rear box (5).

14. Vehicle according to one of claims 12 or 13, **characterized in that** the flow opening (15) is designed to be manually closable.

15. Vehicle according to claim 14, **characterized in that** the flow opening (15) is sealed in its closed position so as to be watertight with respect to the rear box (5).

## Revendications

1. Véhicule, notamment véhicule de combat militaire, avec une coque de véhicule (2) et une tourelle d'armement (3) agencée au-dessus de la coque de véhicule (2) de manière à pouvoir tourner autour d'un axe directionnel azimutal (A), recevant une arme (4), sur le côté arrière de laquelle est agencé au moins un caisson arrière (5) avec un appareil de traitement de l'air (7) pour la décontamination et/ou la mise en température de l'air intérieur du véhicule,
caractérisé en ce
la tourelle d'armement (3) présente une structure de toit (8) montée sur le toit de tourelle (3.1) de la tourelle d'armement (3) avec une amenée d'air frais (9) pour alimenter l'appareil de traitement de l'air (7) en air frais (F).

2. Véhicule selon la revendication 1, **caractérisé en ce que** la structure de toit (8) présente un plan de structure (8.1) espacé par rapport au toit de la tourelle (3.1) pour l'agencement d'un appareil rapporté, notamment d'un appareil de visualisation et/ou d'un armement secondaire (13), et/ou pour l'agencement de modules de protection de toit.

3. Véhicule selon la revendication 2, **caractérisé en ce que** l'amenée d'air frais (9) est prévue dans la zone entre le plan de structure (8.1) et le toit de tourelle (3.1).

4. Véhicule selon l'une quelconque des revendications précédentes, **caractérisé en ce que** l'amenée d'air frais (9) présente plusieurs ouvertures d'aspiration (9.1).

5. Véhicule selon la revendication 4, **caractérisé en ce que** les ouvertures d'aspiration (9.1) sont réalisées sous forme de fente.

6. Véhicule selon la revendication 5, **caractérisé en ce que** les ouvertures d'aspiration (9.1) s'étendent dans la direction verticale.

7. Véhicule selon l'une quelconque des revendications 4 à 6, **caractérisé en ce que** les ouvertures d'aspiration (9.1) s'étendent, chacune au moins partiellement, le long de deux surfaces latérales (8.3, 8.4) et/ou d'une surface arrière (8.5) et/ou d'une surface avant (8.6) de la structure de toit (8).

8. Véhicule selon l'une quelconque des revendications précédentes, **caractérisé en ce que** l'amenée d'air frais (9) est reliée en écoulement à l'appareil de traitement de l'air (7) par un canal d'écoulement (10).

9. Véhicule selon la revendication 8, **caractérisé en ce que** le canal d'écoulement (10) s'étend le long du toit de tourelle (3.1) jusque dans une zone au-dessus du caisson arrière (5).

10. Véhicule selon l'une quelconque des revendications précédentes, **caractérisé en ce que** le caisson arrière (5) est agencé de manière à pouvoir pivoter par rapport à la tourelle d'armement (3) autour d'un axe de pivotement (S₁) s'étendant dans la direction verticale.

11. Véhicule selon la revendication 10, **caractérisé en ce que** le canal d'écoulement (10) présente une première section (10.1) agencée de manière fixe par rapport à la tourelle et une deuxième section (10.2) pouvant pivoter conjointement avec le caisson arrière (5) par rapport à la tourelle d'armement (3).

12. Véhicule selon l'une quelconque des revendications 8 à 11, **caractérisé en ce que** le canal d'écoulement (10), et notamment la section pivotante (10.2) du canal d'écoulement (10), est relié par écoulement à l'appareil de traitement de l'air (7) par une ouverture de passage (15).

13. Véhicule selon la revendication 12, **caractérisé en ce que** l'ouverture de passage (15) est agencée sur le côté supérieur du caisson arrière (5) au-dessus d'un espace de montage de l'appareil de traitement de l'air (7) dans le caisson arrière (5).

14. Véhicule selon l'une quelconque des revendications 12 ou 13, **caractérisé en ce que** l'ouverture de passage (15) est réalisée pour pouvoir être fermée manuellement.

15. Véhicule selon la revendication 14, **caractérisé en ce que** l'ouverture de passage (15) est rendue étanche à l'eau par rapport au caisson arrière (5) dans sa position fermée.
